(19) Europäisches Patentamt
European Patent Office
Office européen des brevets

(11) **EP 1 025 460 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.$^7$: **G02B 25/00**

(21) Anmeldenummer: **98954139.6**

(86) Internationale Anmeldenummer:
**PCT/DE98/02640**

(22) Anmeldetag: **07.09.1998**

(87) Internationale Veröffentlichungsnummer:
**WO 99/022264 (06.05.1999 Gazette 1999/18)**

(54) **MIKROSKOP-OKULAR MIT 10-FACHER VERGRÖSSERUNG**

MICROSCOPE EYEPIECE WITH 10x MAGNIFICATION

OCULAIRE DE MICROSCOPE A GROSSISSEMENT 10x

(84) Benannte Vertragsstaaten:
**AT CH DE FR GB IT LI NL**

(30) Priorität: **24.10.1997 DE 19746925**

(43) Veröffentlichungstag der Anmeldung:
**09.08.2000 Patentblatt 2000/32**

(73) Patentinhaber: **Leica Microsystems Wetzlar GmbH**
**35578 Wetzlar (DE)**

(72) Erfinder: **HERMANNS, Klaus**
**D-35614 Asslar (DE)**

(74) Vertreter: **Reichert, Werner F., Dr.**
**Leica Microsystems International Holdings GmbH,**
**Konzernstelle Patente + Marken,**
**Postfach 20 20**
**35530 Wetzlar (DE)**

(56) Entgegenhaltungen:
DE-A- 2 337 650      DE-A- 3 925 246
US-A- 3 867 018      US-A- 4 200 357
US-A- 5 255 121

• W. KLEIN: "Aufbau und Korrektion der Mikroskopokulare " JAHRBUCH FÜR OPTIK UND FEINMECHANIK ,1977, XP002093430 in der Anmeldung erwähnt
• PATENT ABSTRACTS OF JAPAN vol. 096, no. 005, 31. Mai 1996 & JP 08 005937 A (CANON INC), 12. Januar 1996
• PATENT ABSTRACTS OF JAPAN vol. 006, no. 198 (P-147), 7. Oktober 1982 & JP 57 108822 A (NIPPON KOGAKU KK), 7. Juli 1982
• PATENT ABSTRACTS OF JAPAN vol. 007, no. 125 (P-200), 31. Mai 1983 & JP 58 043418 A (NIHON KOUGAKU KOGYO KK), 14. März 1983
• PATENT ABSTRACTS OF JAPAN vol. 095, no. 006, 31. Juli 1995 & JP 07 063996 A (NIKON CORP), 10. März 1995 in der Anmeldung erwähnt

EP 1 025 460 B1

**Beschreibung**

Die Erfindung betrifft ein Mikroskop-Okular mit 10-facher Vergrößerung gemäß dem Oberbegriff des Anspruchs 1.

Einfache Okulare für ein Mikroskop bestehen aus mehreren Linsen bzw. Kittgliedern mit positiver Brechkraft. Manche enthalten zusätzlich eine Feldlinse mit positiver Brechkraft, um die Abbildung der Sehfeldblende oder den Durchmesser der Augenlinse günstig zu beeinflussen. Die Richtung und Krümmung der Bildfeldwölbung eines Okulars wird durch seine Petzvalsumme SP quantitativ beschrieben, wobei

$$SP = f / n$$

(mit f = Brennweite des Okulars; n= mittlere Brechzahl ) gilt. Sie ist in einem solchen Okular positiv und groß, sodaß bei korrigiertem Astigmatismus die Bildfeldwölbung auch groß ist.

Um einem Betrachter am Mikroskop ein geebnetes Bild anzubieten, muß das Mikroobjektiv eine der Bildfeldwölbung des Okulars entgegengesetzte Bildfeldwölbung aufweisen. Dazu ist es bekannt, bei der Bildfehlerkorrektur von Mikroskopen mit einem Kompensationsmodell zu arbeiten, bei dem Mikroobjektive und Okulare mit aufeinander abgestimmtem Astigmatismus kombiniert werden. Ein solches Kompensationsmodell wird in einem Aufsatz von W. Klein im "Jahrbuch für Optik", Jahrgang 1977, Seiten 95-127, beschrieben.

Dabei wird der Astigmatismus bei einander zugeordneten, sogenannten Kompensations-Mikroobjektiven und sogenannten Kompensations-Okularen nicht vollständig korrigiert, sondern jeweils auf einen bestimmten Wert eingestellt. Dieser jeweils eingestellte Wert des Astigmatismus wird im folgenden als Soll-Astigmatismus bezeichnet. Ein Kompensations-Mikroobjektiv erzeugt aufgrund seines Soll-Astigmatismus eine Bildfeldwölbung im Zwischenbild, die von dem zugeordneten Kompensations-Okular aufgrund seines Soll-Astigmatismus geebnet wird. Dazu wird der Soll-Astigmatismus des Kompensations-Okulars betragsmäßig gleich und mit entgegengesetztem Vorzeichen zu dem Soll-Astigmatismus des Kompensations-Mikroobjektivs eingestellt.

Obgleich sich die Erfindung auf eine Kompensationsoptik bezieht, werden im folgenden vereinfachend die Kompensations-Okulare als Okulare und die Kompensations-Mikroobjektive als Mikroobjektive bezeichnet.

Da die Anforderungen an die Mikroobjektive - z.B. eine noch bessere Korrektion im VIS/UV-Bereich des Spektrums bei gleichzeitig hoher UV-Durchlässigkeit, noch bessere apochromatische Korrektion, noch größerer freier Arbeitsabstand, etc. - ständig gestiegen sind, wird es immer schwieriger, solche Mikroobjektive technisch und wirtschaftlich darzustellen.

Zur Darstellung solcher neuer, hochkorrigierter Mikroobjektive mußte ihr Soll-Astigmatismus auf die Hälfte des bisher üblichen Wertes festgesetzt werden. Daher sind zur Beibehaltung der Kompensation auch Okulare mit einer Halbierung ihres Soll-Astigmatismus und ihrer Soll-Bildfeldwölbung entsprechend dem entgegengesetzt gleichen Wert für den neuen, halbierten Soll-Astigmatismus der neuen Mikroobjektive erforderlich.

Diese Okulare müssen sich entsprechend dem geringeren Soll-Astigmatismus gegenüber den bisherigen Okularen durch eine sehr kleine Petzval-Summe SP auszeichnen. Die tatsächliche Größe der Petzvalsumme hängt von der Qualität der tolerierten Restbildfehler ab. Für ein hochkorrigiertes Okular mit 10-facher Vergrößerung und einer Sehfeldzahl SFZ = 25 soll beispielsweise die Petzval-Summe SP etwa 0,015 betragen, um den geforderten, neuen Wert des Soll-Astigmatismus zu leisten. Die Abbildungsfehler sind dann entsprechend den hochkorrigierten Mikroobjektiven eng toleriert. Für den Fall eines auf Unendlich akkomodierten Auges wird die Augenlinse auf 0 Doptrien eingestellt. Für diese Einstellung der Augenlinse darf der maximal durchstrahlte, sogenannte freie Linsendurchmesser 30 mm nicht übersteigen, um aufgrund der Außenabmessungen der Okulare den binokularen Einblick in den Tubus auch für kleine Augenweitenstellungen zu gewährleisten.

Zum Stand der Technik gehören Okulare mit geringer Petzval-Summe, die sich durch eine Feldlinse sowie eine stark brechende Negativlinse im sogenannten Augenlinsenteil, d.h. der Linsengruppe zwischen dem Auge und dem reellen Zwischenbild im Okular, auszeichnen. Nachfolgend werden solche Okulare genannt und - nach entsprechender Umrechnung - auf ihre mögliche Verwendung in dem vorliegenden Kompensationssystem geprüft.

So wird in der US 5,255,121 ein solches Okular angegeben, welches eine Petzval-Summe größer als 0,015 besitzt. Nachteilig ist jedoch, daß sowohl Koma, Zonenastigmatismus, Pupillendifferenz und Verzeichnungen (> 3%) aus dem angestrebten Bereich fallen. Es hat zwei Einzellinsen als Feldlinsenteil mit einem Feldlinsenfaktor beta' = 1,053. Es benötigt insgesamt sieben Linsen, die das Okular teuer machen. Wenn der freie Linsendurchmesser auf die Sehfeldzahl SFZ = 25 skaliert wird, ist er größer als 30 mm.

Das Okular aus der US 3,867,018 hat sechs Linsen, davon eine dünne, plankonvexe Linse als Feldlinse mit einem Feldlinsenfaktor beta' = 0,767. Die Petzvalsumme ist mit 0,007 zu klein für die angestrebte Kompensationsoptik. Auch sind die Koma und die astigmatische Verzeichnung sehr groß, ebenso der Farblängsfehler der Pupille. Außerdem ist der freie Linsendurchmesser, auf die Sehfeldzahl SFZ = 25 skaliert, größer als 30 mm.

In der DE 39 25 246 C2 wird in einer Ausführungsform ein Okular mit einem verkitteten Feldlinsenglied mit einem Feldlinsenfaktor beta' = 1,047 angegeben. Es besteht aus nur sechs Linsen. Nachteilig ist die schlechte Bildkorrektion mit starker Koma, zu großer Pupillendifferenz und einer Verzeichnung über 3 %. Der freie Linsendurchmesser ist, skaliert auf eine Sehfeldzahl SFZ = 25, deutlich größer als 30 mm. Außerdem ist die Petzvalsumme für diese Sehfeldzahl größer als der angestrebte Wert von 0,015.

Die JP 07063996 A beschreibt ein Okular, in dem die Negativlinse an zweiter Stelle im Augenlinsenteil angeordnet ist. Die Negativlinse ist als Kittglied mit negativer Brechkraft wahlweise mit oder ohne eine weitere dazugestellte Negativlinse dargestellt. Die Feldlinse ist ein Kittglied in Form eines Meniskus, der konvex zum Mikroobjektiv ist. Der Feldlinsenfaktor ist gleich 0,996. Das Okular ist gut auskorrigiert und der freie Linsendurchmesser beträgt weniger als 30 mm. Jedoch ist seine Petzvalsumme gleich 0,019. Außerdem benötigt es sieben bzw. acht Linsen, was das Okular teuer macht.

Die meisten genannten Okulare weisen zwar eine kleine Petzval-Summe auf, die aber den speziellen Anforderungen an das vorhandene Kompensationssystem nicht gerecht wird. Außerdem weisen sie entweder Mängel in ihrer Abbildungsleistung auf und bzw. oder sind mit zu vielen Linsen realisiert. Auch ist der freie Linsendurchmesser bei den meisten bekannten Okularen zu groß.

Es ist daher Aufgabe der vorliegenden Erfindung, ein Okular mit 10-facher Vergrößerung anzugeben, welches sich zum Einsatz in einer gegebenen Kompensationsoptik eignet. Es soll sich durch eine sehr gute Korrektion aller Bildfehler auszeichnen.

Das Okular soll für Brillenträger geeignet sein, also eine angemessene Dioptrienverstellung ermöglichen. Außerdem dürfen die durchstrahlten freien Linsendurchmesser - bei einer Einstellung der Augenlinse auf 0 Dioptrien - maximal 30 mm sein. Nur dann sind die Außenabmessungen der Okulare klein genug, um sie auch für enge Augenweiten einstellen zu können.

Diese Aufgabe wird durch die im Patentanspruch 1 angegebenen Merkmale gelöst. Vorteilhafte Weiterbildungen der Erfindung sind Gegenstand der Unteransprüche.

Angegeben wird ein Mikroskop-Okular mit 10-facher Vergrößerung und einer Sehfeldzahl SFZ ≤ 25, in dem in Lichtrichtung vor einer Feldblende eine Feldlinse mit einem Feldlinsenfaktor beta' zwischen 0,95 und 1,05 in Form eines einfachen, zur Feldblende konvexen, dicken Meniskus mit positiver Brechkraft angeordnet ist. Augenseitig folgt der Feldblende ein Augenlinsenteil, das in Lichtrichtung als erste Linse eine Negativlinse aufweist und zur Dioptrieneinstellung relativ zu Feldblende verschiebbar ist. Entsprechend dem vorgegeben Kompensationssystem beträgt die Petzvalsumme SP zwischen 0,014 und 0,021. Sie wird mit der Negativlinse des Augenlinsenteils auf den jeweils erforderlichen Wert eingestellt.

Die Bildfehler Astigmatismus, Verzeichnung und Öffnungsfehler der Pupille sind in dem Augenlinsenteil eng mit einander verknüpft. So hat eine Durchbiegung oder Brechkraftverteilung im Augenlinsenteil keinen großen Einfluß auf das Verhältnis dieser Bildfehler zueinander, d.h. es können nicht alle drei Bildfehler auf einmal auf den gewünschten Wert korrigiert werden.

In der Feldlinse, die auf der anderen Seite der Feldblende sitzt, haben die drei Bildfehler ein anderes Verhältnis zueinander als im Augenlinsenteil. Daher kann durch Ausbalancieren der Anteile der Bildfehler zwischen der Feldlinse und dem Augenlinsenteil der Summenfehler von Astigmatismus, Ver-, zeichnung und Pupillendifferenz auf gewünschte Werte eingestellt werden.

Bei diesem Bildfehlerausgleich ist die Durchbiegung der Feldlinse besonders vorteilhaft, wenn für die Eingangsschnittweite s der Feldlinse ein Wert zwischen 20 mm und 23 mm und für die Entfernung der Eintrittspupille des Okulars vom reellen Zwischenbild des Mikroobjektivs ein Wert zwischen 250 mm und 700 mm vorgegeben wird und die Seidel-Summe SA für den Astigmatismus der Feldlinse zwischen 0,0092 und 0,0104 liegt.

In einer vorteilhaften Ausführungsform des erfindungsgemäßen Okulars ist die Eingangsschnittweite s der Feldlinse mit s = 21,46 mm und die Entfernung zwischen der Eintrittspupille des Okulars und dem reellen Zwischenbild des Mikroobjektivs mit 360 mm vorgegeben. Die Seidel-Summe SA für den Astigmatismus der Feldlinse beträgt SA = 0,0098.

Der Auswahl des Feldlinsenfaktors beta' kommt besondere Bedeutung zu. Bei einem beta' < 1 folgt für die Brennweite des Augenlinsenteils f'(AL) < 25 mm. Dies gibt jedoch ein angespanntes Augenlinsenteil, das bereits für die Einstellung auf 0 Dioptrien zu nahe am Okularrohr sitzt. Dadurch wird die geforderte Dioptrienverstellung einseitig eingeschränkt.

Bei einem beta' > 1 ist die Brennweite des Augenlinsenteils größer. Allerdings gehen wegen des vergrößerten Zwischenbildes die Strahlbüschel auch höher durch das Augenlinsenteil und erleiden daher stärkere, unerwünschte Bildfehler.

Daher ist für den Feldlinsenfaktor beta' ≅ 1 mit einer Abweichung von ± 5% der günstigste Wert. Die Ausführung der Feldlinse als dicker Meniskus, konvex zum Augenlinsenteil, bewirkt eine Bildhebung (d.h. das Augenlinsenteil rückt weiter vom Okularrohr weg) und hat ein passendes Verhältnis für die drei genannten, kritischen Bildfehler.

Bei manchen mikroskopischen Untersuchungen werden Strichplatten am Ort der Feldblende eingesetzt, um das betrachtete Bild mit einer Maßeinteilung zu versehen. Für diese Anwendung erweist es sich als besonders vorteilhaft, wenn der Feldlinsenfaktor exakt beta' = 1 ist. Dadurch ist das reelle Zwischenbild nach der Feldlinse genauso groß wie das Zwischenbild, das ohne Feldlinse entstehen würde. Daraus ergibt sich der Vorteil, daß die gleichen Strichplatten wie in Okularen ohne Feldlinse verwendbar sind.

In einer vorteilhaften Ausführungsform des Okulars ist das Maß der Zwischenbildverlagerung (= Abstand der Zwischenbilder mit und ohne Feldlinse) größer als 4 mm. Dann ist durch Variation des Luftabstandes zwischen der Feldblende und dem Augenlinsenteil um ca. 4 mm eine Dioptrienverstellung bis zu $\pm$ 6 Dioptrien möglich.

Das erfindungsgemäße Okular ist gut korrigiert und realisiert die für das Kompensationssystem erforderliche ideale tangentiale Bildschale sehr genau. Es hat keine Koma, besitzt eine günstige Pupillendifferenz und weist nur geringe Verzeichnung (unter 3 %) auf.

Die Unteransprüche beschreiben die erfindungsgemäße Ausgestaltung der Feldlinse und zwei spezielle Ausgestaltungen des erfindungsgemäßen Okulars mit ihren Konstruktionsdaten. Die Feldlinse erweist sich als universell verwendbar in verschiedenen Okularen. Selbst ihre Verwendung in Okularen, die nicht der Mikroskopie dienen, ist möglich.

Eine spezielle Ausführungsform der Feldlinse ist im Anspruch 5 angegeben. Sie besitzt an ihrer vorderen Fläche, also der Lichteintrittsfläche, einen ersten Radius $r_1$ = 34.1960 mm und an ihrer hinteren Fläche, also der Lichtaustrittsfläche, einen zweiten Radius $r_2$ = 31.1010 mm. Die Linsendicke $d_1$ des durch diese beiden Radien $r_1$ und $r_2$ beschriebenen Meniskus beträgt $d_1$ = 7.3000 mm. Das verwendete Glas zeichnet sich durch eine Brechzahl $n_{e1}$ = 1.812653 und eine Abbesche Zahl $\nu_{e1}$ = 25.19 aus.

Die beiden in den Unteransprüchen angegeben speziellen Ausgestaltungen des Okulars werden im folgenden anhand zweier schematischer Zeichnungen näher erläutert.

Es zeigen:

**Fig. 1 :** Linsenschnittbild eines erfindungsgemäßen Okulars mit einer Sehfeldzahl SFZ = 25 gemäß Anspruch 7;

**Fig. 2 :** Linsenschnittbild eines erfindungsgemäßen Okulars mit einer Sehfeldzahl SFZ = 22 gemäß Anspruch 8.

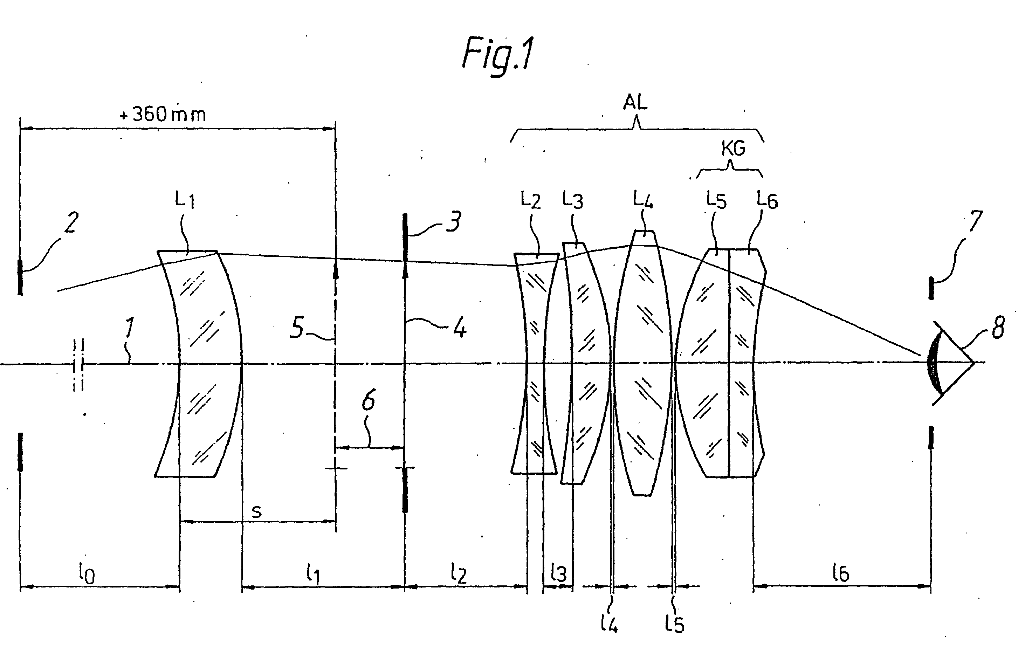

In **Fig. 1** ist längs einer optischen Achse 1 eines Okulars mit 10-facher Vergrößerung und einer Sehfeldzahl SFZ = 25 in Lichtrichtung als erstes eine Eintrittspupille 2 dargestellt. Nach einem verkürzt dargestellten Luftabstand $l_0$ folgt eine erste Linse $L_1$, die als Feldlinse in Form eines dicken Meniskus der Dicke $d_1$ ausgebildet ist. Ihre vordere Fläche mit einem Radius $r_1$ und ihre hintere Fläche mit einem Radius $r_2$ sind konvex zu einer Feldbtende 3, die in einem Luftabstand $l_1$ nachfolgend angeordnet ist.

In der Ebene der Feldblende 3 liegt das Zwischenbild 4, welches von der Feldlinse $L_1$ erzeugt wird. Zum Vergleich ist das Zwischenbild 5 des (hier nicht dargestellten) Mikroobjektivs dargestellt, das ohne die Feldlinse $L_1$ erzeugt würde. Ebenfalls dargestellt ist die Bildverlagerung 6 zwischen diesen beiden Zwischenbildern 4, 5, welche in diesem Beispiel mehr als 4 mm beträgt.

Die Eingangsschnittweite s der Feldlinse $L_1$ ist s = 21.46 mm, und die Entfernung der Eintrittspupille 2 des Okulars von dem reellen, unverschobenen Zwischenbild 5 des Mikroobjektivs hat einen Wert von 360 mm. Die Seidel-Summe SA für den Astigmatismus der Feldlinse $L_1$ beträgt SA = 0.0098. Die Feldlinse $L_1$ besitzt einen besonders vorteilhaften Feldlinsenfaktor beta' = 1, das heißt, das unverschobene, reelle Zwischenbild 5 und das von der Feldlinse $L_1$ verschobene, reelle Zwischenbild 4 sind gleich groß. Dadurch können in der Ebene der Feldblende 3 die gleichen Strichplatten wie in Okularen ohne Feldlinse verwendet werden.

Nach der Feldblende 3 folgt in einem Luftabstand $l_2$ eine bikonkave Negativlinse $L_2$ mit einer Dicke $d_2$, einem vorderen Radius $r_3$ und einem hinteren Radius $r_4$. Nachfolgend ist in einem Luftabstand $l_3$ eine konkav-konvexe Positivlinse $L_3$ mit einer Dicke $d_3$ angeordnet, deren vordere konkave Fläche einen Radius $r_5$ und deren hintere konvexe Fläche einen Radius $r_6$ aufweist. Nach einem kleinen Luftabstand $l_4$ folgt eine dicke, bikonvexe Positivlinse $L_4$ der Dicke $d_4$ mit einem vorderen Radius $r_7$ und einem hinteren Radius $r_8$.

Nach einem weiteren kleinen Luftabstand $l_5$ folgt ein Kittglied KG mit positiver Brechkraft, bestehend aus der als erstes durchstrahlten Linse $L_5$ und einer nachfolgend verkitteten Linse $L_6$. Die Linse $L_5$ besitzt eine Dicke $d_5$, einen vorderen Radius $r_9$ sowie einen hinteren Radius $r_{10}$. Der hintere Radius $r_{10}$ ist zugleich der vordere Radius der nachfolgend aufgekitteten Linse $L_6$ mit einer Dicke $d_6$. Deren hintere Fläche ist mit einem Radius $r_{11}$ konkav zur Austrittspupille 7, die in einem Luftabstand $l_6$ hinter dem Kittglied KG liegt. In der Ebene der Austrittspupille 7 ist symbolisch ein Betrachterauge 8 dargestellt. Der Strahlengang der Randstrahlen durch das Okular ist schematisch dargestellt. Der erforderliche freie Durchmesser an der Stelle des größten Bündelquerschnitts beträgt weniger als 30 mm.

Die Linsengruppe $L_2$, $L_3$, $L_4$ sowie das Kittglied KG, bestehend aus den Linsen $L_5$ und $L_6$, bilden zusammen ein Augenlinsenteil AL. Die Linse $L_2$ ist dabei die erforderlich starke Negativlinse, welche die Petzvalsumme in den gewünschten Bereich senkt.

Die Feldlinse $L_1$ setzt die aus dem Mikroobjektiv kommenden, leicht divergenten Hauptstrahlen in konvergente um, welche die nachfolgende Negativlinse $L_2$ des Augenlinsenteils AL wieder aufweitet, aber nicht in so starkem Maße

wie ohne Feldlinse $L_1$. Die folgenden Positivlinsen $L_3$, $L_4$ und das Kittglied aus $L_5$ und $L_6$ lassen die Hauptstrahlen jeweils sanft - und damit mit nur kleinen Bildfehlem - konvergieren. Das Kittglied KG bildet die Strahlen in die Ebene der Austrittspupille 7 ab, in welcher sie das Betrachterauge 8 wahmimmt.

Durch Ausbalancieren der Bildfehler der Feldlinse $L_1$ und des Augenlinsenteils AL bietet das erfindungsgemäße Okular eine gute Bildkorrektur. Seine Petzvalsumme SP beträgt SP = 0.015 und ist damit bei einer Sehfeldzahl SFZ = 25 ideal für das vorgegebene Kompensationsmodell. Indem der Luftabstand $I_2$ zwischen der Feldblende 3 und dem Augenlinsenteil AL um bis zu 4 mm variiert werden kann, ist eine Dioptrienverstellung bis zu $\pm$ 6 Dioptrien möglich.

Die exakten Konstruktionsdaten des Okulars sind in Tabellenform im Anspruch 7 angegeben. Als Feldlinse $L_1$ wird die in Anspruch 5 angegebene verwendet.

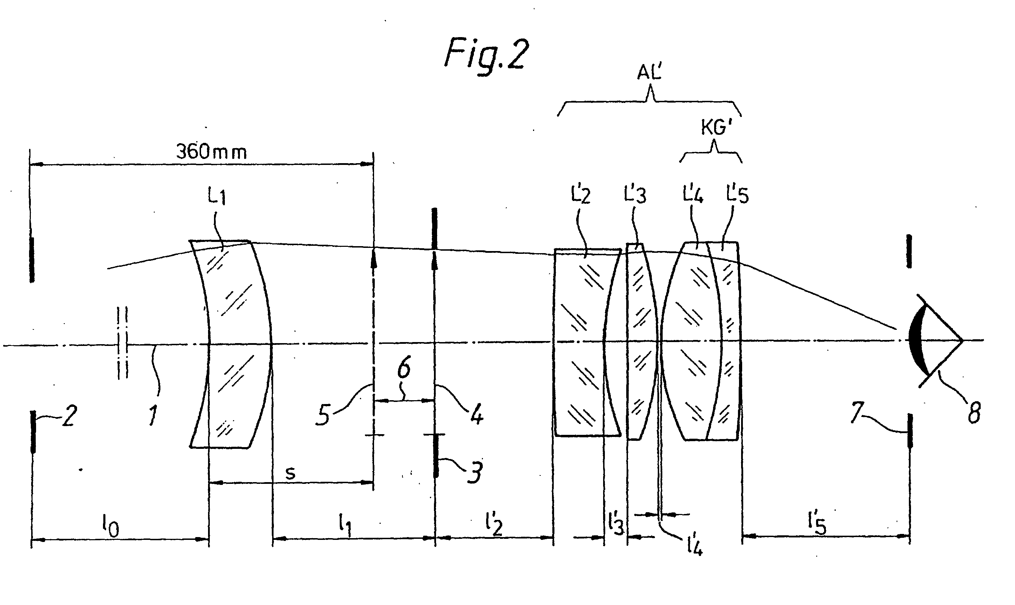

In *Fig. 2* ist ein Okular mit 10-facher Vergrößerung und einer Sehfeldzahl SFZ = 22 dargestellt. Der Aufbau des Okulars ist bis zur Feldblende 3 identisch wie bei dem Okular ( SFZ = 25) in *Fig. 1.* Das heißt, längs der optischen Achse 1 ist in Lichtrichtung als erstes die Eintrittspupille 2 des Okulars dargestellt. Nach dem verkürzt dargestellten Luftabstand $I_0$ folgt die aus *Fig. 1* bereits bekannte Feldlinse $L_1$, die in Form eines dicken Meniskus der Dicke $d_1$ ausgebildet ist. Ihre vordere Fläche mit dem Radius $r_1$ und ihre hintere Fläche mit dem Radius $r_2$ sind konvex zu der Feldblende 3, die in einem Luftabstand $I_1$ nachfolgend angeordnet ist.

In der Ebene der Feldblende 3 liegt das Zwischenbild 4, welches von der Feldlinse $L_1$ erzeugt wird. Zum Vergleich ist das Zwischenbild 5 des (hier nicht dargestellten) Mikroobjektivs dargestellt, das ohne Feldlinse $L_1$ erzeugt würde. Das Maß der Bildverlagerung 6 zwischen diesen beiden Zwischenbildern 4, 5 ist ebenfalls dargestellt und beträgt mehr'als 4 mm.

Die Eingangsschnittweite s der Feldlinse $L_1$ ist s = 21.46 mm, und die Entfernung der Eintrittspupille 2 des Okulars von dem reellen, unverschobenen Zwischenbild 5 des Mikroobjektivs hat einen Wert von 360 mm. Die Seidel-Summe SA für den Astigmatismus der Feldlinse $L_1$ beträgt SA = 0.0098. Die Feldlinse $L_1$ besitzt einen besonders vorteilhaften Feldlinsenfaktor beta' = 1, das heißt, das unverschobene, reelle Zwischenbild 5 und das von der Feldlinse $L_1$ verschobene, reelle Zwischenbild 4 sind gleich groß. Dadurch können in der Ebene der Feldblende 3 die gleichen Strichplatten wie in Okularer ohne Feldlinse verwendet werden.

Nach der Feldblende 3 unterscheidet sich die Darstellung in *Fig. 2* jedoch von der in *Fig. 1*. Nach der Feldblende 3 folgt in einem Luftabstand $I'_2$ als starke Negativlinse eine konvex-konkave Linse $L'_2$ der Dicke $d'_2$ mit einem vorderen Radius $r'_3$ und einem hinteren Radius $r'_4$. Dicht dahinter ist eine Positivlinse $L'_3$ mit der Dicke $d'_3$ angeordnet, deren vordere Fläche mit dem Radius $r'_5$ eine Planfläche ist und deren hintere Fläche konvex mit einem Radius $r'_6$ ist.

Nach einem kurzen Luftabstand $I'_4$ folgt ein Kittglied KG' mit positiver Brechkraft, bestehend aus der als erstes durchstrahlten Linse $L'_4$ und der nachfolgend damit verkitteten Linse $L'_5$. Nach dem Kittglied KG' folgt in einem Luftabstand $I'_5$ eine Austrittspupille 7, in deren Ebene das Betrachterauge 8 symbolisch dargestellt ist. Der Strahlengang der Randstrahlen durch das Okular ist schematisch dargestellt. Der erforderliche freie Durchmesser an der Stelle des größten Bündelquerschnitts beträgt weniger als 30 mm.

Die vordere Fläche der Linse $L'_4$ ist mit einem Radius $r'_7$ konvex zur Feldblende 3. Ihre hintere, verkittete Fläche ist mit einem Radius $r'_8$ konvex zu der Austrittspupille 7. Die erste Fläche der mit der Linse $L'_4$ verkitteten Linse $L'_5$ besitzt denselben Radius $r'_8$ wie die hintere Fläche der Linse $L'_4$. Die hintere Fläche der Linse $L'_5$ ist sehr flach konvex zur Austrittspupille 7 mit einem Radius $r'_9$.

Die Linsengruppe $L'_2$, $L'_3$ sowie das Kittglied KG', bestehend aus $L'_4$ und $L'_5$, bilden zusammen ein Augenlinsenteil AL'. Die Linse $L'_2$ ist dabei die starke Negativlinse, mit welcher die Petzval-Summe des Okulars auf den gewünschten Wert eingestellt werden kann.

Die Feldlinse $L_1$ macht die aus dem Mikroobjektiv kommenden, leicht divergenten Hauptstrahlen wieder konvergent. Die nachfolgende Negativlinse $L'_2$ des Augenlinsenteils AL' weitet sie wieder auf, aber nicht in so starkem Maße wie ohne Feldlinse $L_1$. Die folgende Positivlinse $L'_3$ und das Kittglied KG' aus den Linsen $L'_4$ und $L'_5$ lassen die Hauptstrahlen jeweils in schwachem Maße konvergieren, wodurch nur sehr kleine Bildfehler entstehen. Durch das Kittglied KG' werden die Strahlen in die Ebene der Austrittspupille 7 abgebildet, in welcher sie das Betrachterauge 8 wahrnimmt.

Die Bildfehler der Feldlinse $L_1$ und des Augenlinsenteils AL' sind so ausbalanciert, daß das erfindungsgemäße Okular eine gute Bildkorrektur besitzt. Seine Petzvalsumme SP beträgt SP = 0.021 und ist damit - bei einer Sehfeldzahl SFZ = 22 - ideal für das vorliegende Kompensationsmodell. Durch Variieren des Luftabstandes $I'_2$ zwischen der Feldblende 3 und dem Augenlinsenteil AL' um bis zu 4 mm ist eine Dioptrienverstellung bis zu $\pm$ 6 Dioptrien möglich.

Die exakten Konstruktionsdaten des in diesem Beispiel beschriebenen Okulars sind in Tabellenform in Anspruch 8 angegeben. Die verwendete Feldlinse $L_1$ entspricht Anspruch 5.

Die beiden Ausführungsbeispiele machen deutlich, daß dieselbe Feldlinse bei im Aufbau grundlegend unterschiedlichen Augenlinsenteilen eingesetzt werden kann. Ihre Lokalisierung im Strahlengang und ihre prinzipielle Gestaltung sind daher erfindungswesentlich.

EP 1 025 460 B1

**Bezugszeichenliste**

1 = optische Achse bzw. Mittenstrahl
2 = Eintrittspupille des Okulars
3 = Feldblende
4 = durch die Feldlinse $L_1$ verlagertes Zwischenbild
5 = Zwischenbild direkt vom Mikroobjektiv, ohne Feldlinse $L_1$
6 = Bildverlagerung durch die Feldlinse $L_1$
7 = Austrittspupille
8 = Betrachterauge
s = Eingangsschnittweite der Feldlinse $L_1$
$L_1$ = Feldlinse der Dicke $d_1$ mit $r_1$/ $r_2$ = vorderer/hinterer Radius
$L_2$ = Negativlinse der Dicke $d_2$ mit $r_3$/ $r_4$ = vorderer/hinterer Radius
$L_3$ = dritte Linse der Dicke $d_3$ mit $r_5$/ $r_6$ = vorderer/hinterer Radius
$L_4$ = vierte Linse der Dicke $d_4$ mit $r_7$/ $r_8$ = vorderer/hinterer Radius
$L_5$ = fünfte Linse der Dicke $d_5$ mit $r_9$/ $r_{10}$ = vorderer/hinterer Radius
$L_6$ = sechste Linse der Dicke $d_6$ mit $r_{10}$/ $r_{11}$= vorderer/hinterer Radius
KG = Kittglied aus $L_5$ und $L_6$
AL = Augenlinsenteil bestehend aus $L_2$ bis $L_6$
$L_1'$ = Feldlinse der Dicke $d_1'$ mit $r_1'$/$r_2'$ = vorderer/hinterer Radius
$L_2'$ = Negativlinse der Dicke $d_2'$ mit $r_3'$/ $r_4'$ = vorderer/hinterer Radius
$L_3'$ = dritte Linse der Dicke $d_3'$ mit $r_5'$/ $r_6'$ = vorderer/hinterer Radius
$L_4'$ = vierte Linse der Dicke $d_4'$ mit $r_7'$/ $r_8'$ = vorderer/hinterer Radius
$L_5'$ = fünfte Linse der Dicke $d_5'$ mit $r_8'$/ $r_9'$ = vorderer/hinterer Radius
KG' = Kittglied aus $L_4'$ und $L_5'$
AL' = Augenlinsenteil bestehend aus $L_2'$ bis $L_5'$

**Patentansprüche**

1. Mikroskop-Okular mit 10-facher Vergrößerung, einer Sehfeldzahl SFZ = 25 und einer Feldblende (3), wobei in Lichtrichtung vor der Feldblende (3) eine Feldlinse ($L_1$) und hinter der Feldblende (3) als erste Linse eines zur Dioptrieneinstellung relativ zur Feldblende (3) verschiebbaren Augenlinsenteils (AL) eine Negativlinse ($L_2$) vorgesehen ist,
**dadurch gekennzeichnet,**

   a) dass die Feldlinse ($L_1$) in Form eines einfachen, zur Feldblende (3) konvexen, dicken Meniskus mit positiver Brechkraft ausgebildet ist, wobei die Feldlinse ($L_1$) folgende Konstruktionsparameter aufweist:

| Radius $r_1$ (mm) | Radius $r_2$ (mm) | Linsendicke d | Brechzahl $n_e$ | Abbesche Zahl $\nu_e$ |
|---|---|---|---|---|
| $r_1$ = -34.1960 | $r_2$ = -31.1010 | $d_1$ = 7.3000 | $n_{e1}$ = 1.812653 | $\nu_{e1}$ = 25.19 |

   wobei $r_1$ = Radius der vorderen Fläche ( = Lichteintrittsfläche) und $r_2$ = Radius der hinteren Fläche ( = Lichtaustrittsfläche) ist, und dass die Feldlinse ($L_1$) bei einer Eingangsschnittweite von 21,46 mm einen Feldlinsenfaktor beta'= 1 aufweist,

   b) und dass das Augenlinsenteil hinter der Negativlinse ($L_2$) zwei Positivlinsen ($L_3$, $L_4$,) und ein Kittglied ($L_5$+$L_6$) mit positiver Brechkraft aufweist, wobei die Brechkraft der Negativlinse ($L_2$) so ausgebildet ist, dass die Petzvalsumme SP des gesamten Okulars in dem Bereich $0,014 \leq SP \leq 0,021$ liegt.

2. Mikroskop-Okular mit 10-facher Vergrößerung, einer Sehfeldzahl SFZ = 22 und einer Feldblende (3), wobei in Lichtrichtung vor der Feldblende (3) eine Feldlinse ($L_1$) und hinter der Feldblende (3) als erste Linse eines zur Dioptrieneinstellung relativ zur Feldblende (3) verschiebbaren Augenlinsenteils (AL) eine Negativlinse ($L_2$) vorgesehen ist,

6

**dadurch gekennzeichnet,**

a) dass die Feldlinse ($L_1$) in Form eines einfachen, zur Feldblende (3) konvexen, dicken Meniskus mit positiver Brechkraft ausgebildet ist, wobei die Feldlinse ($L_1$) folgende Konstruktionsparameter aufweist:

| Radius $r_1$ (mm) | Radius $r_2$ (mm) | Linsendicke d (mm) | Brechzahl $n_e$ | Abbesche Zahl $\nu_e$ |
|---|---|---|---|---|
| $r_1$ = -34.1960 | $r_2$ = -31.1010 | $d_1$ = 7.3000 | $n_{e1}$ = 1.812653 | $\nu_{e1}$ = 25.19 |

wobei $r_1$ = Radius der vorderen Fläche ( = Lichteintrittsfläche) und $r_2$ = Radius der hinteren Fläche (= Lichtaustrittsfläche) ist, und dass die Feldlinse ($L_1$) bei einer Eingangsschnittweite von 21,46 mm einen Feldlinsenfaktor beta'= 1 aufweist,

b) und dass das Augenlinsenteil hinter der Negativlinse ($L'_2$) eine Positivlinse ($L'_3$), und ein Kittglied ($L'_4$+$L'_5$) mit positiver Brechkraft aufweist, wobei die Brechkraft der Negativlinse ($L'_2$) so ausgebildet ist, dass die Petzvalsumme SP des gesamten Okulars in dem Bereich $0,014 \leq SP \leq 0,021$ liegt.

3. Mikroskop-Okular nach Anspruch 1 mit einer Sehfeldzahl SFZ = 25, **dadurch gekennzeichnet, dass** sie eine Petzvalsumme von SP=0,015 besitzt und die folgenden Konstruktionsdaten aufweist:

| Radius r (mm) | Luftabstand l (mm) | Linsendicke d (mm) | Brechzahl $n_e$ | Abbesche Zahl $\nu_e$ |
|---|---|---|---|---|
| Eintrittspupille | | | | |
| | $l_0$ = 338.5400 | | | |
| $r_1$ = -34.1960 | | $d_1$ = 7.3000 | $n_{e1}$ = 1.812653 | $\nu_{e1}$ = 25.19 |
| $r_2$ = -31.1010 | | | | |
| | $l_1$ = 19.5000 | | | |
| Feldblende | | | | |
| | $l_2$ = 14.3364 | | | |
| $r_3$ = -50.6810 | | $d_2$ = 2.0000 | $n_{e2}$ = 1.812653 | $\nu_{e2}$ = 25.19 |
| $r_4$ = 50.6810 | | | | |
| | $l_3$ = 3.3400 | | | |
| $r_5$ = -87.8770 | | $d_3$ = 4.6600 | $n_{e3}$ = 1.808207 | $\nu_{e3}$ = 46.16 |
| $r_6$ = -31.4830 | | | | |
| | $l_4$ = 0.2000 | | | |
| $r_7$ = 51.4910 | | $d_4$ = 7.0000 | $n_{e4}$ = 1.776855 | $\nu_{e4}$ = 49.33 |
| $r_8$ = -51.4910 | | | | |
| | $l_5$ = 0.2000 | | | |
| $r_9$ = 24.1070 | | $d_5$ = 6.6000 | $n_{e5}$ = 1.622872 | $\nu_{e5}$ = 59.89 |
| $r_{10}$ = -557.6800 | | $d_6$ = 2.8000 | $n_{e6}$ = 1.812653 | $\nu_{e6}$= 25.19 |
| $r_{11}$ = 42.8390 | | | | |
| | $l_6$ = 20.6265 | | | |
| Austrittspupille | | | | |

4. Mikroskop-Okular nach Anspruch 2 mit einer Sehfeldzahl SFZ = 22, **dadurch gekennzeichnet, dass** sie eine Petzvalsumme von SP=0,021 besitzt und die folgenden Konstruktionsdaten aufweist:

| Radius r (mm) | Luftabstand l (mm) | Linsendicke d (mm) | Brechzahl $n_e$ | Abbesche Zahl $\nu_e$ |
|---|---|---|---|---|
| Eintrittspupille | | | | |
| | $l_0 = 338.5400$ | | | |
| $r_1 = -34.1960$ | | $d_1 = 7.3000$ | $n_{e1} = 1.812653$ | $\nu_{e1} = 25.19$ |
| $r_2 = -31.1010$ | | | | |
| | $l_1 = 19.5000$ | | | |
| Feldblende | | | | |
| | $l'_2 = 14.2931$ | | | |
| $r'_3 = 360.7850$ | | $d'_2 = 6.0000$ | $n'_{e2} = 1.812653$ | $\nu'_{e2} = 25.19$ |
| $r'_4 = 30.1760$ | | | | |
| | $l'_3 = 2.7000$ | | | |
| $r'_5 = $ Planfläche | | $d'_3 = 3.7000$ | $n'_{e3} = 1.808207$ | $\nu'_{e3} = 46.16$ |
| $r'_6 = -34.5320$ | | | | |
| | $l'_4 = 0.2500$ | | | |
| $r'_7 = 24.1070$ | | $d'_4 = 7.4000$ | $n'_{e4} = 1.776855$ | $\nu'_{e4} = 49.33$ |
| $r'_8 = -36.7630$ | | $d'_5 = 2.3000$ | $n'_{e5} = 1.812653$ | $\nu'_{e5} = 25.19$ |
| $r'_9 = -197.2040$ | | | | |
| | $l'_5 = 21.3813$ | | | |
| Austrittspupille | | | | |

## Claims

1. Microscope eyepiece with 10× magnification, a field of view number FVN = 25 and a field stop (3), in which there is provided in front of the field stop (3) in the direction of light a field lens ($L_1$) and behind the field stop (3) a negative lens ($L_2$), as the first lens of an eye lens part (AL) which can be displaced in relation to the field stop (3) for dioptric setting, **characterized in that**

   a) the field lens ($L_1$) is designed in the form of a simple thick meniscus, convex with respect to the field stop (3), with a positive refractive power, the field lens ($L_1$) having the following structural parameters:

| Radius $r_1$ (mm) | Radius $r_2$ (mm) | Lens thickness d | Refractive index $n_e$ | Abbe number $\nu_e$ |
|---|---|---|---|---|
| $r_1 = -34.1960$ | $r_2 = -31.1010$ | $d_1 = 7.3000$ | $n_{e1} = 1.812653$ | $\nu_{e1} = 25.19$ |

   where $r_1$ = radius of the front face (= light entering face) and $r_2$ = radius of the rear face (= light exiting face), and **in that**, with a given entrance back focus of 21.46 mm, the field lens ($L_1$) has a field lens factor of beta' = 1,

   b) and **in that** the eye lens part behind the negative lens ($L_2$) has two positive lenses ($L_3$, $L_4$) and a lens component ($L_5+L_6$) with a positive refractive power, the refractive power of the negative lens ($L_2$) being designed such that the Petzval sum SP of the complete eyepiece lies in the range $0.014 \le SP \le 0.021$.

2. Microscope eyepiece with 10× magnification, a field of view number FVN = 25 and a field stop (3), in which there is provided in front of the field stop (3) in the direction of light a field lens ($L_1$) and behind the field stop (3) a negative lens ($L_2$), as the first lens of an eye lens part (AL) which can be displaced in relation to the field stop (3) for dioptric setting, **characterized in that**

a) the field lens (L$_1$) is designed in the form of a simple thick meniscus, convex with respect to the field stop (3), with a positive refractive power, the field lens (L$_1$) having the following structural parameters:

| Radius r$_1$ (mm) | Radius r$_2$ (mm) | Lens thickness d | Refractive index n$_e$ | Abbe number v$_e$ |
|---|---|---|---|---|
| r$_1$=-34.1960 | r$_2$=-31.1010 | d$_1$=7.3000 | n$_{e1}$=1.812653 | v$_{e1}$=25.19 |

where r$_1$ = radius of the front face (= light entering face) and r$_2$ = radius of the rear face (= light exiting face), and **in that**, with a given entrance back focus of 21.46 mm, the field lens (L$_1$) has a field lens factor of beta' = 1,

b) and **in that** the eye lens part behind the negative lens (L'$_2$) has a positive lens (L'$_3$) and a lens component (L'$_4$+L'$_5$) with a positive refractive power, the refractive power of the negative lens (L'$_2$) being designed such that the Petzval sum SP of the complete eyepiece lies in the range 0.014 ≤ SP ≤ 0.021.

3. Microscope eyepiece according to Claim 1 with a field of view number FVN = 25, **characterized in that** it has a Petzval sum of SP = 0.015 and has the following structural data:

| Radius r (mm) | Air clearance l (mm) | Lens thickness d (mm) | Refractive index n$_e$ | Abbe number v$_e$ |
|---|---|---|---|---|
| Entrance pupil | | | | |
| | l$_0$=338.5400 | | | |
| r$_1$=-34.1960 | | d$_1$=7.3000 | n$_{e1}$=1.812653 | v$_{e1}$=25.19 |
| r$_2$=-31. 1010 | | | | |
| | l$_1$=19.5000 | | | |
| Field stop | | | | |
| | l$_2$=14.3364 | | | |
| r$_3$=-50.6810 | | d$_2$=2.0000 | n$_{e2}$=1.812653 | v$_{e2}$=25.19 |
| r$_4$=50.6810 | | | | |
| | l$_3$=3.3400 | | | |
| r$_5$=-87.8770 | | d$_3$=4.6600 | n$_{e3}$=1.808207 | v$_{e3}$=46.16 |
| r$_6$=-31.4830 | | | | |
| | l$_4$=0.2000 | | | |
| r$_7$=51.4910 | | d$_4$=7.0000 | n$_{e4}$=1.776855 | v$_{e4}$=49.33 |
| r$_8$=-51.4910 | | | | |
| | l$_5$=0.2000 | | | |
| r$_9$=24.1070 | | d$_5$=6.6000 | n$_{e5}$=1.622872 | v$_{e5}$=59.89 |
| r$_{10}$=-557.6800 | | d$_6$=2.8000 | n$_{e6}$=1.812653 | v$_{e6}$=25.19 |
| r$_{11}$=42.8390 | | | | |
| | l$_6$=20.6265 | | | |
| Exit pupil | | | | |

4. Microscope eyepiece according to Claim 2 with a field of view number FVN = 22, **characterized in that** it has a Petzval sum of SP = 0.021 and has the following structural data:

| Radius r (mm) | Air clearance l (mm) | Lens thickness d (mm) | Refractive index n$_e$ | Abbe number v$_e$ |
|---|---|---|---|---|
| Entrance pupil | | | | |

(continued)

| Radius r (mm) | Air clearance l (mm) | Lens thickness d (mm) | Refractive index $n_e$ | Abbe number $\nu_e$ |
|---|---|---|---|---|
| | $l_0$=338.5400 | | | |
| $r_1$=-34.1960 | | $d_1$=7.3000 | $n_{e1}$=1.812653 | $\nu_{e1}$=25.19 |
| $r_2$=-31.1010 | | | | |
| | $l_1$=19.5000 | | | |
| Field stop | | | | |
| | $l'_2$=14.2931 | | | |
| $r'_3$=360.7850 | | $d'_2$=6.0000 | $n'_{e2}$=1.812653 | $\nu'_{e2}$=25.19 |
| $r'_4$=30.1760 | | | | |
| | $l'_3$=2.7000 | | | |
| $r'_5$=planar face | | $d'_3$=3.7000 | $n'_{e3}$=1.808207 | $\nu'_{e3}$=46.16 |
| $r'_6$=-34.5320 | | | | |
| | $l'_4$=0.2500 | | | |
| $r'_7$=24.1070 | | $d'_4$=7.4000 | $n'_{e4}$=1.776855 | $\nu'_{e4}$=49.33 |
| $r'_8$=-36.7630 | | $d'_5$=2.3000 | $n'_{e5}$=1.812653 | $\nu'_{e5}$=25.19 |
| $r'_9$=-197.2040 | | | | |
| | $l'_5$ =21.3813 | | | |
| Exit pupil | | | | |

**Revendications**

1. Oculaire de microscope à agrandissement de 10 fois, avec un coefficient de champ SFZ = 25 et un diaphragme de champ (3), une lentille de champ ($L_1$) étant prévue dans la direction de la lumière en avant du diaphragme de champ (3) et une lentille négative ($L_2$) d'une partie de lentille oculaire (AL) apte à coulisser par rapport au diaphragme de champ (3) pour le réglage de la dioptrie étant prévue comme première lentille en arrière du diaphragme de champ (3),
**caractérisé en ce que**

   a) la lentille de champ ($L_1$) présente la forme d'un simple ménisque épais à pouvoir réfringent positif et convexe du côté du diaphragme de champ (3), la lentille de champ ($L_1$) présentant les paramètres de construction suivants:

| Rayon $r_1$ (mm) | Rayon $r_2$ (mm) | Epaisseur de lentille d | Indice de réfraction $n_e$ | Indice d'Abbe $\nu_e$ |
|---|---|---|---|---|
| $r_1$= -34,1960 | $r_2$= -31,1010 | $d_1$= 7,3000 | $n_{e1}$= 1,812653 | $\nu_{e1}$= 25,19 |

   $r_1$ étant le rayon de la surface avant (= surface d'entrée de la lumière) et $r_2$ = le rayon de la surface arrière (= surface de sortie de la lumière), et **en ce que** la lentille de champ ($L_1$) présente un facteur de lentille de champ bêta' = 1 pour une longueur focale de 21,46 mm,
   b) et **en ce que** la partie de lentille oculaire présente en aval de la lentille négative ($L_2$) deux lentilles positives ($L_3$, $L_4$) et un élément collé ($L_5$+$L_6$) à pouvoir réfringent positif, le pouvoir réfringent de la lentille négative ($L_2$) étant réglé de telle sorte que la somme de Petzval SP de l'ensemble de l'oculaire est comprise dans la plage de 0,014 ≤ SP ≤ 0,021.

2. Oculaire de microscope à agrandissement de 10 fois, avec un coefficient de champ SFZ = 22 et un diaphragme de champ (3), une lentille de champ ($L_1$) étant prévue dans la direction de la lumière en avant du diaphragme de champ (3) et une lentille négative ($L_2$) d'une partie de lentille oculaire (AL) apte à coulisser par rapport au diaphragme de champ (3) pour le réglage de la dioptrie étant prévue comme première lentille en arrière du diaphragme de champ (3),
**caractérisé en ce que**

a) la lentille de champ ($L_1$) présente la forme d'un simple ménisque épais à pouvoir réfringent positif et convexe du côté du diaphragme de champ (3), la lentille de champ ($L_1$) présentant les paramètres de construction suivants:

| Rayon $r_1$ (mm) | Rayon $r_2$ (mm) | Epaisseur de lentille d | Indice de réfraction $n_e$ | Indice d'Abbe $\nu_e$ |
|---|---|---|---|---|
| $r_1$= -34,1960 | $r_2$= -31,1010 | $d_1$= 7,3000 | $n_{e1}$= 1,812653 | $\nu_{e1}$= 25,19 |

$r_1$ étant le rayon de la surface avant (= surface d'entrée de la lumière) et $r_2$ = le rayon de la surface arrière (= surface de sortie de la lumière), et **en ce que** la lentille de champ ($L_1$) présente un facteur de lentille de champ bêta' = 1 pour une longueur focale de 21,46 mm,

b) et **en ce que** la partie de lentille oculaire présente en aval de la lentille négative ($L'_2$) une lentille positive ($L'_3$) et un élément collé ($L'_4$+$L'_5$) à pouvoir réfringent positif, le pouvoir réfringent de la lentille négative ($L'_2$) étant réglé de telle sorte que la somme de Petzval SP de l'ensemble de l'oculaire est comprise dans la plage de $0,014 \leq SP \leq 0,021$.

3. Oculaire de microscope selon la revendication 1, avec un coefficient de champ SFZ = 25, **caractérisé en ce qu'**il présente une somme de Petzval SP=0,015 et présente les données de construction suivantes:

| Rayon r (mm) | Interstice l (mm) | Epaisseur de lentille d (mm) | Indice de réfraction $n_e$ | Indice d'Abbé $\nu_e$ |
|---|---|---|---|---|
| Pupille d'entrée | | | | |
| | $l_0$=338,5400 | | | |
| $r_1$=-34,1960 | | $d_1$=7,3000 | $n_{e1}$=1,812653 | $\nu_{e1}$=25,19 |
| $r_2$=-31,1010 | | | | |
| | $l_1$=19,5000 | | | |
| Diaphragme de champ | | | | |
| | $l_2$=14,3364 | | | |
| $r_3$=-50,6810 | | $d_2$=2,0000 | $n_{e2}$=1,812653 | $\nu_{e2}$=25,19 |
| $r_4$=50,6810 | | | | |
| | $l_3$=3,3400 | | | |
| $r_5$=-87,8770 | | $d_3$=4,6600 | $n_{e3}$=1,808207 | $\nu_{e3}$=46,16 |
| $r_6$=-31,4830 | | | | |
| | $l_4$=0,2000 | | | |
| $r_7$=51,4910 | | $d_4$=7,0000 | $n_{e4}$=1,776855 | $\nu_{e4}$=49,33 |
| $r_6$=-51,4910 | | | | |
| | $l_5$=0,2000 | | | |
| $r_9$=24,1070 | | $d_5$=6,6000 | $n_{e5}$=1,622872 | $\nu_{e5}$=59,89 |
| $r_{10}$=-557,6800 | | $d_6$=2,8000 | $n_{e6}$=1,812653 | $\nu_{e6}$=25,19 |
| $r_{11}$=42,8390 | | | | |
| | $l_6$=20,6265 | | | |
| Pupille de sortie | | | | |

**4.** Oculaire de microscope selon la revendication 2, avec un coefficient de champ SFZ = 22, **caractérisé en ce qu'il** présente une somme de Petzval SP=0,021 et présente les données de construction suivantes:

| Rayon r (mm) | Interstice l (mm) | Epaisseur de lentille d (mm) | Indice de réfraction $n_e$ | Indice d'Abbe $\nu_e$ |
|---|---|---|---|---|
| Pupille d'entrée | | | | |
| | $l_0$=338,5400 | | | |
| $r_1$=-34,1960 | | $d_1$=7,3000 | $n_{e1}$=1,812653 | $\nu_{e1}$=25,19 |
| $r_2$=-31,1010 | | | | |
| | $l_1$=19,5000 | | | |
| Diaphragme de champ | | | | |
| | $l'_2$=14,2931 | | | |
| $r'_3$=360,7850 | | $d'_2$=6,0000 | $n'_{e2}$=1,812653 | $\nu'_{e2}$=25,19 |
| $r'_4$=30,1760 | | | | |
| | $l'_3$=2,7000 | | | |
| $r'_5$=surface plane | | $d'_3$=3,7000 | $n'_{e3}$=1,808207 | $\nu'_{e3}$=46,16 |
| $r'_6$=-34,5320 | | | | |
| | $l'_4$=0,2500 | | | |
| $r'_7$=24,1070 | | $d'_4$=7,4000 | $n'_{e4}$=1,776855 | $\nu'_{e4}$=49,33 |
| $r'_8$=-36,7630 | | $d'_5$=2,3000 | $n'_{e5}$=1,812653 | $\nu'_{e5}$=25,19 |
| $r'_9$= -197,2040 | | | | |
| | $l'_5$=21,3813 | | | |
| Pupille de sortie | | | | |

*Fig.1*

EP 1 025 460 B1

*Fig.2*

EP 1 025 460 B1